# EUROPÄISCHE PATENTANMELDUNG

(11) **EP 2 028 613 A1**
(43) Veröffentlichungstag der Anmeldung: **25.02.2009**
(21) Anmeldenummer: 08105088.2
(22) Anmeldetag: 21.08.2008
(51) Int. Cl.: G06Q 10/00, B07C 3/00

(54) **Verfahren und Vorrichtung zum Transportieren eines Gegenstands**

(30) Priorität: 24.08.2007 DE 102007040157
(71) Anmelder: Siemens Aktiengesellschaft, 80333 München (DE); SIEMENS AKTIENGESELLSCHAFT ÖSTERREICH, D-80506 München (DE)
(72) Erfinder: Lamprecht, Thorsten, Winterthur 8400 (CH); Mebold, Harald, Konstanz 78464 (DE)

(57) **Zusammenfassung**

Die Erfindung betrifft ein Verfahren und eine Vorrichtung zum Transportieren eines Gegenstands (10) zu einem Zielpunkt. Der Gegenstand (10) ist mit einer Kennzeichnung (11) desjenigen Zielpunkts versehen, an den der Gegenstand (10) zu transportieren ist. Darüber hinaus wird der Gegenstand (10) zusätzlich mit einer Kennzeichnung (19) eines Transport-Dienstleisters versehen. Der Gegenstand (10) wird zu einer Sortieranlage (2) transportiert und durchläuft die Sortieranlage (2). In ein Datenerfassungssystem (16, 17) der Sortieranlage (2) wird eine Information (24) zum Zielpunkt, mit dem der Gegenstand (10) versehen ist, eingegeben. Automatisch wird entschieden, ob beim Durchlaufen des Gegenstands (10) ein vorgegebenes Fehlersignal (22) für einen Transportfehler eingegeben wurde oder nicht. Die Sortieranlage (2) löst abhängig von der eingegebenen Zielpunkt-Information (24) einen Weitertransport des Gegenstands (10) zum Zielpunkt aus. In dem Fall, dass das Fehlersignal (22) für einen Transportfehler eingegeben wurde, wird eine Nachricht (20) generiert. Diese Nachricht (20) beschreibt den Transportfehler, umfasst die eingegebene Zielpunkt-Information (24) und wird an denjenigen Transport-Dienstleister übermittelt, der den Transport zur Sortieranlage (2) ausgelöst hat.

## Beschreibung

Die Erfindung betrifft ein Verfahren und eine Vorrichtung zum Transportieren eines Gegenstands zu einem Zielpunkt. Der Gegenstand ist insbesondere eine Postsendung, die mit einer Zustelladresse versehen ist.

Ein Verfahren mit den Merkmalen des Oberbegriffs des Anspruchs 1 und eine Vorrichtung mit den Merkmalen des Oberbegriffs des Anspruchs 8 sind aus DE 10043752 A1 bekannt. Dort werden ein Verfahren und eine Vorrichtung zur Handhabung von Logistikvorgängen und zur Verfolgung von Postsendungen beschrieben. Jedes Transportgut wird mit einem berührungslos beschreibbaren Datenspeicher, z. B. einem RFID-Transponder, versehen. Das Transportgut wird beim Transport über eine Logistikkette von einem Transportmittel in ein anderes Transportmittel übergeben. Daten über die Logistikkette und erste Statusdaten werden zu Beginn des Transports in deren RFID-Transponder geschrieben. Bei jeder Übergabe des Transportguts werden weitere Daten in den RFID-Transponder geschrieben, z. B. eine Bestätigung für die Übergabe an das weitere Transportmittel. In einer Ausgestaltung sind RFID-Lesegeräte entlang der Logistikkette mit einem Zentralsystem verbunden. Dieses Zentralsystem vergleicht vorgegebene Soll-Zustände mit Ist-Daten. Bei Abweichungen wird ein Alarm z. B. an den Absender oder einen betroffenen Transporteur gegeben.

In DE 10006242 B4 wird ein Verfahren beschrieben, wie der Transport von Postsendungen überwacht und protokolliert wird. Jede Sendung wird mit einer eindeutigen Kennung gekennzeichnet und durchläuft während des Transports mehrere Sortieranlagen. Für jede Sendung wird in der Ursprungs-Sortieranlage ein Datensatz angelegt. Der Weg der Postsendung durch die Sortieranlagen wird aufgezeichnet. Die Ergebnisse dieser Aufzeichnungen werden an die Ursprungs-Sortieranlage zurückgemeldet. Diese aktualisiert den Datensatz für die Postsendung laufend.

Der Erfindung liegt die Aufgabe zugrunde, ein Verfahren mit den Merkmalen des Oberbegriffs des Anspruchs 1 und eine Vorrichtung mit den Merkmalen des Oberbegriffs des Anspruchs 8 bereitzustellen, welche eine Unterbrechung der Verarbeitungskette im Fall von Transportfehlern vermeidet.

Die Aufgabe wird durch ein Verfahren mit den Merkmalen des Anspruchs 1 und eine Vorrichtung mit den Merkmalen des Anspruchs 8 gelöst. Vorteilhafte Ausgestaltungen sind in den Unteransprüchen angegeben.

Der Gegenstand ist mit einer Kennzeichnung desjenigen Zielpunkts versehen, an den der Gegenstand zu transportieren ist. Darüber hinaus wird der Gegenstand zusätzlich mit einer Kennzeichnung eines Transport-Dienstleisters versehen.

Folgende Schritte werden ausgeführt:
- Der Gegenstand wird mindestens einmal zu einer Sortieranlage transportiert.
- Der Gegenstand durchläuft die Sortieranlage.
- In ein Datenerfassungssystem der Sortieranlage wird eine Information zum Zielpunkt, mit dem der Gegenstand versehen ist, eingegeben.
- Automatisch wird entschieden, ob beim Durchlaufen des Gegenstands in das Datenerfassungssystem ein vorgegebenes Fehlersignal für einen Transportfehler eingegeben wurde oder nicht.
- Die Sortieranlage löst abhängig von der eingegebenen Zielpunkt-Information einen Weitertransport des Gegenstands zum Zielpunkt aus.

In dem Fall, dass das Fehlersignal für einen Transportfehler eingegeben wurde, wird eine Nachricht über den Transportfehler generiert. Diese Nachricht beschreibt den Transportfehler und umfasst die eingegebene Zielpunkt-Information.

Diese Nachricht wird an denjenigen Transport-Dienstleister übermittelt, der den Transport zu derjenigen Sortieranlage ausgelöst hat, in der der Transportfehler entdeckt wurde. Um diesen Transport-Dienstleister zu ermitteln, wird die Kennzeichnung des Transport-Dienstleisters, mit dem der Gegenstand versehen ist, ausgewertet.

Dadurch wird dieser Transport-Dienstleister in die Lage versetzt, zukünftige Transportfehler zu vermeiden.

Die Erfindung erspart die Notwendigkeit, den Gegenstand im Sortierzentrum aus der normalen Verarbeitung herauszunehmen, wenn ein Transportfehler entdeckt wurde. Vielmehr wird der Gegenstand normal weiterverarbeitet. Die Schritte, dass ein Fehlersignal eingegeben und automatisch erkannt wird, stören den normalen Ablauf nicht. Der Gegenstand wird - gemeinsam mit anderen Gegenständen, die die Sortieranlage durchlaufen - verarbeitet und an den richtigen Zielpunkt transportiert. Parallel zu dieser Verarbeitungskette wird die Nachricht an den Transport-Dienstleister ausgelöst.

Dieser wird u. a. dadurch erreicht, dass das Fehlersignal in dasselbe Datenerfassungssystem eingegeben wird, in das auch Angaben zum Zielpunkt eingegeben werden. Es ist also nicht erforderlich, zwischen verschiedenen Datenerfassungssystemen zu wechseln, um einerseits die Zielpunkt-Angaben und andererseits ein Fehlersignal einzugeben.

Die Erfindung ermöglicht es zwar, erspart die Notwendigkeit, jeden Gegenstand mit einem Datenspeicher zu versehen, z. B. einem berührungslos auslesbaren Datenspeicher, und die Informationen in diesem Datenspeicher auszulesen und mit zentral abgespeicherten Solldaten zu vergleichen. Auch ohne einen solchen Datenspeicher lässt sich ermitteln, an welchen Transport-Dienstleister die Nachricht über den Transportfehler zu übermitteln ist. Damit spart die Erfindung Datenspeicher sowie Lesegeräte für derartige Datenspeicher ein.

Der Gegenstand ist beispielsweise ein Paket, ein Päckchen oder eine sonstige Postsendung. In einer anderen Anwendung ist der Gegenstand das Gepäck eines Reisenden, das auf einem Flughafen oder in einem Bahnhof oder Hafen getrennt vom Reisenden zu einem Ziel-Flughafen oder Ziel-Bahnhof oder Ziel-Hafen transportiert wird.

Die Kennung des Transport-Dienstleisters, mit dem der zu transportierende Gegenstand versehen ist, ist in einer Ausführungsform maschinenlesbar, z. B. ein Bar Code oder ein Matrixcode. In einer anderen Ausführungsform ist die Kennung auch von einem Menschen lesbar, beispielsweise ein Schriftzug oder ein Logo.

Möglich ist auch, dass der Gegenstand mit einer eindeutigen Kennung versehen ist, die diesen Gegenstand von allen anderen Gegenständen unterscheidet, die innerhalb eines bestimmten Zeitraums die Sortieranlage durchlaufen. Die Kennung ist beispielsweise ein Bar Code oder eine sonstige maschinenlesbare Kennung. In einer zentralen Datenbank ist ein Datensatz für den Gegenstand hinterlegt. Dieser Datensatz umfasst die Kennung für den Gegenstand sowie eine Kennung für den Transport-Dienstleister. Der Schritt, den Transport-Dienstleister zu ermitteln, umfasst die Schritte, dass die Kennung des Gegenstands gelesen wird, der Datensatz für den Gegenstand in der zentralen Datenbank gesucht und gefunden wird und durch Auswertung dieses Datensatzes der Transport-Dienstleister ermittelt wird.

Vorzugsweise umfasst das Datenerfassungssystem ein System zur Erfassung und Auswertung gesprochener Sprache. Der Schritt, die Zielpunkt-Information über den Gegenstand einzugeben, umfasst den Schritt, dass diese Zielpunkt-Informationen durch Spracheingabe in das Datenerfassungssystem eingegeben werden und dieses die eingegebene Sprache auswertet. Auf dem gleichen Wege wird das Fehlersignal eingegeben, nämlich indem ein vorgegebenes Wort oder eine Wortfolge durch Spracheingabe in das Datenerfassungssystem eingegeben wird.

Diese Ausgestaltung ermöglicht es, ein ohnehin vorhandenes Datenerfassungssystem zusätzlich zur Fehlereingabe zu verwenden. Nicht erforderlich ist es, ein zusätzliches separates Fehlereingabesystem vorzusehen. Dies erspart den Aufwand dafür, ein zusätzliches System bereitzustellen und nutzen zu müssen. Weiterhin erfordert diese Ausgestaltung einen besonders geringen Aufwand, um einen falsch transportierten Gegenstand zu behandeln.

Möglich ist aber auch, dass ein eigenes Fehlererfassungssystem vorgesehen wird, bei dem man z. B. einen eigens dafür vorgesehen Knopf drückt, um das Auftreten eines Fehlers zu melden.

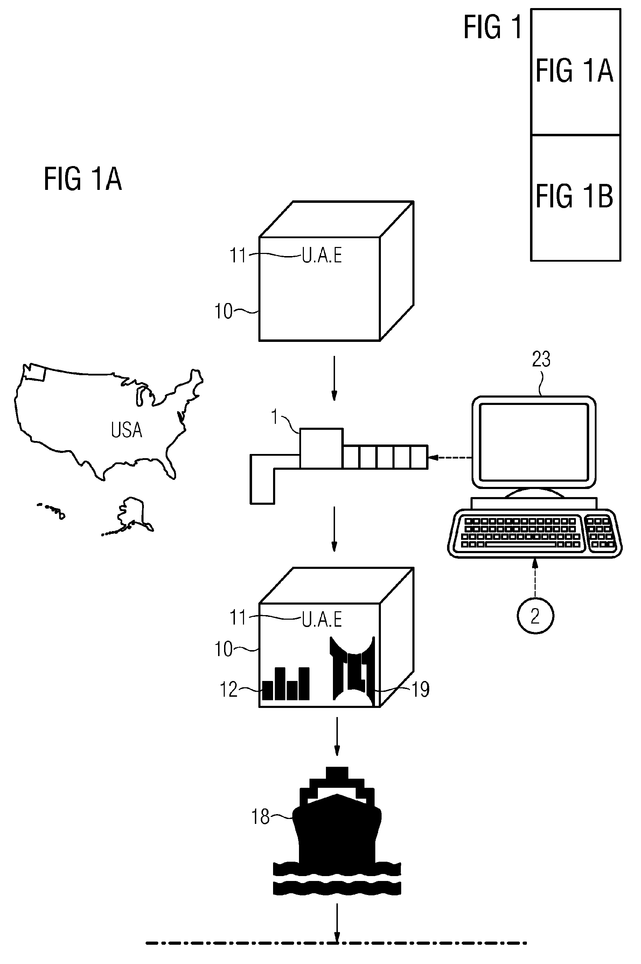

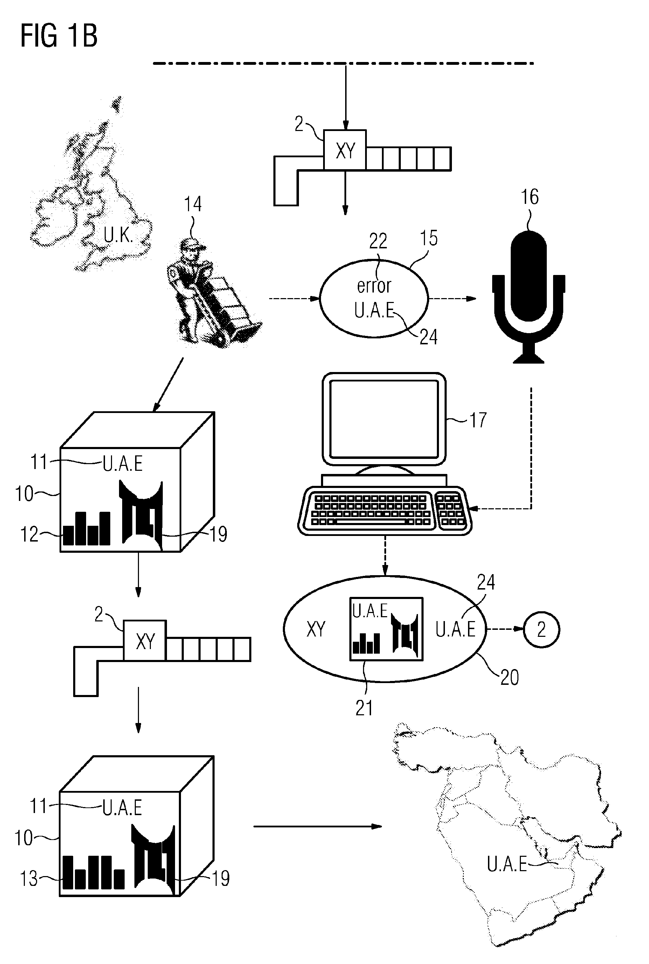

Im Folgenden wird die Erfindung anhand eines Ausführungsbeispiels beschrieben. Dabei zeigt
- Fig. 1: einen Ablauf beim Transport eines Pakets.

Im Ausführungsbeispiel wird die Erfindung eingesetzt, um Postsendungen, insbesondere Pakete und Päckchen, zu transportieren. Jede Postsendung ist mit jeweils einer Kennzeichnung einer Zustelladresse versehen. Die jeweilige Zustelladresse fungiert als der Zielpunkt, an den die Postsendung zu transportieren ist.

Im Beispiel der Fig. 1 wird ein Paket 10 in den USA aufgegeben. Das Paket ist mit einer Kennzeichnung einer Zustelladresse versehen, in diesem Fall ein Ort in den Vereinigten Arabischen Emiraten ("United Arab Emirate", "U.A.E."). In Fig. 1 sind Materialflüsse mit durchgezogenen und Datenflüsse mit gestrichelten Linien dargestellt.

Jede Postsendung wird in einem Einlieferungs-Postamt oder in einer Einlieferungs-Paketfachanlage einem ersten Transport-Dienstleister übergeben. Die Postsendung kann auch aus einem Briefkasten stammen. Dieser erste Transport-Dienstleister fungiert als der Transport-Dienstleister der Patentansprüche und betreibt mindestens eine erste Sortieranlage. Alle Postsendungen von dem Einlieferungs-Postamt bzw. der Einlieferungs-Paketfachanlage werden mit einer Kennzeichnung des ersten Transport-Dienstleisters versehen und durchlaufen diese erste Sortieranlage. Die Kennzeichnung hat beispielsweise die Form eines Logos, welches den ersten Transport-Dienstleister von anderen Unternehmen unterscheidet.

Im Beispiel der Fig. 1 gelangt das Paket 10 zu einer ersten Sortieranlage 1 eines Transport-Dienstleisters TL1. Diese erste Sortieranlage 1 versieht das Paket mit einer Kennzeichnung 19 in Form eines Logos für TL1.

Die Postsendung 10 wird beispielsweise dann mit der Kennzeichnung versehen, wenn die Postsendung in dem Einlieferungs-Postamt aufgegeben oder in die Einlieferungs-Paketfachanlage eingelegt wird. Möglich ist auch, dass die erste Sortieranlage 1 die Postsendung 10 mit der Kennzeichnung des ersten Transport-Dienstleisters versieht.

In einer bevorzugten Ausführungsform wird die Postsendung mit einer eindeutigen Kennung versehen, die eine Kennzeichnung des Transport-Dienstleisters und eine weitere Kennung umfasst. Die weitere Kennung unterscheidet die Postsendung von allen anderen Postsendungen, die der erste Transport-Dienstleister in einem vorgegebenen Zeitraum transportiert. Vorzugsweise generiert die erste Sortieranlage diese Kennung.

In einer Weiterbildung dieser Ausführungsform wird für die Postsendung ein Datensatz in einer zentralen Datenbank angelegt. Dieser Datensatz umfasst die eindeutige Kennung mit der Kennzeichnung des Transport-Dienstleisters und der weiteren Kennung.

Die erste Sortieranlage 1 ermittelt die jeweilige Kennzeichnung 11 der Zustelladresse jeder Postsendung 10, welche die erste Sortieranlage 1 durchläuft. Zunächst versucht sie, die Zustelladresse automatisch zu erkennen.

Gelingt dies nicht oder nicht eindeutig, so wird in einer Ausgestaltung ein Abbild der Postsendung 10, welches die Kennzeichnung 11 der Zustelladresse umfasst, generiert. Dieses Abbild wird an eine erste Videocodierstation übermittelt. Die erste Videocodierstation stellt das Abbild auf einem Anzeigegerät dar. Ein Bearbeiter ermittelt die Zustelladresse im Abbild und gibt diese ein.

In einer Ausführungsform erzeugt die erste Sortieranlage 1 ein Strichmuster ("bar code"), welches die Zustelladresse codiert. Ein Drucker der ersten Sortieranlage 1 versieht die Postsendung mit diesem Strichmuster.

Im Beispiel der Fig. 1 erkennt die erste Sortieranlage 1 die Kennzeichnung 11 der Zustelladresse auf dem Paket 10 nicht korrekt. Die tatsächliche Zustelladresse liegt in den Vereinigten Arabischen Emiraten. Durch einen Lesefehler ermittelt die erste Sortieranlage 1 aber eine falsche Zustelladresse, die in Großbritannien ("United Kingdom", "U.K.") liegt. Die erste Sortieranlage 1 versieht das Paket 10 mit einem Strichmuster 12, welches "Großbritannien" codiert und festlegt, dass das Paket 10 nach Großbritannien zu transportieren ist. Der erste Transport-Dienstleister T1 bemerkt diesen Transportfehler nicht.

Nachdem die Zustelladresse erkannt wurde, löst die erste Sortieranlage 1 einen Weitertransport der Postsendung 10 an die Zustelladresse aus. In der oben beschriebenen Weiterbildung mit der zentralen Datenbank ergänzt die erste Sortieranlage 1 den Datensatz für die Postsendung um die erkannte Zustelladresse.

Im Beispiel der Fig. 1 löst die erste Sortieranlage 1 einen Transport des Pakets 10 nach Großbritannien aus. Das Paket 10 wird auf einem Schiff 18 nach Großbritannien befördert. Dort wird das Paket 10 vom Schiff 18 zu einer zweiten Sortieranlage 2 transportiert und durchläuft diese zweite Sortieranlage 2. Diese zweite Sortieranlage 2 fungiert als die Sortieranlage im Sinne der Patentansprüche.

Die zweite Sortieranlage 2 ist für die Weiterleitung derjenigen Postsendungen zuständig, deren Zustelladresse im Einzugsgebiet der zweiten Sortieranlage 2 liegen. Im Ausführungsbeispiel wird die zweite Sortieranlage 2 von einem zweiten Transport-Dienstleister TL2 betrieben, die erste Sortieranlage 1 von einem ersten Transport-Dienstleister TL1.

Beispielsweise wird die Postsendung von einem Land A in ein anderes Land B geschickt. Die Zustelladresse liegt also im Land B. Die erste Sortieranlage 1 steht im Land A, die zweite Sortieranlage im Land B. Im Beispiel der Fig. 1 befindet sich die erste Sortieranlage 1 in den USA. Die zweite Sortieranlage 2 ist für alle Postsendungen zuständig, die aus dem Ausland kommen und - gemäß einem Ergebnis eines vorhergehenden Transportschritts - an eine Zustelladresse in Großbritannien zugestellt werden sollen. Alle Postsendungen aus dem Ausland nach Großbritannien durchlaufen daher diese zweite Sortieranlage 2.

Die zweite Sortieranlage 2 ermittelt die Zustelladresse, mit der die Postsendung 10 versehen ist. In einer Ausführungsform wird die Zustelladresse erneut gelesen, z. B. von einem Bearbeiter. In einer anderen Ausführungsform liest die zweite Sortieranlage 2 ein Strichmuster ("bar code"), welches auf der Postsendung 10 angebracht ist und die Zustelladresse - oder wenigstens das Zielland - codiert.

In einer weiteren Ausführungsform wird ein Lesezugriff der zweiten Sortieranlage auf die zentrale Datenbank hergestellt. Die zweite Sortieranlage 2 ermittelt die Kennung der Postsendung 10 und anschließend den Datensatz, der diese Kennung umfasst und daher für diese Postsendung 10 angelegt wurde. Die zweite Sortieranlage 2 liest die Zustelladresse aus dem Datensatz aus.

In der zweiten Sortieranlage 2 kontrolliert ein Bearbeiter 14 wenigstens einige der eingehenden Postsendungen darauf, ob die jeweiligen Zustelladressen dieser Postsendungen tatsächlich im Einzugsgebiet der zweiten Sortieranlage 2 liegen oder ob ein Lesefehler oder ein sonstiger Transportfehler vorliegt. Ein Transportfehler liegt insbesondere dann vor, wenn eine Postsendung 10 an eine Zustelladresse Z tatsächlich die zweite Sortieranlage 2 durchläuft, obwohl Postsendungen an Z bei korrekter Beförderung nicht durch die zweite Sortieranlage 2 laufen sollen.

Die tatsächliche Zustelladresse jeder Postsendung 10 wird für die Kontrolle dem Bearbeiter 14 angezeigt. Die zweite Sortieranlage 2 umfasst ein Datenerfassungssystem. Der Bearbeiter 14 gibt in dieses Datenerfassungssystem Eingaben ein. Dann, wenn er festgestellt hat, dass beim Transport einer durchlaufenden Postsendung ein Transportfehler aufgetreten ist, gibt er ein Fehlersignal ein. Dieses Fehlersignal wird mit der durchlaufenden Postsendung verknüpft.

In einer Ausführungsform wird ein Abbild derjenigen Oberfläche der Postsendung erzeugt, welche die Zustelladresse enthält. Dieses Abbild mit der Zustelladresse wird auf einem Bildschirmgerät einer Videocodierstation gezeigt. Das Datenerfassungssystem gehört zur Videocodierstation und umfasst eine Tastatur. Der Bearbeiter betätigt eine spezielle Taste, um das Fehlersignal einzugeben.

Eine andere Ausführungsform wird insbesondere dann angewendet, wenn die Postsendung 10 ein Paket ist. In diesem Fall lädt der Bearbeiter 14 die Postsendung um, während sie die zweite Sortieranlage 2 durchläuft, und kontrolliert sie hierbei. Der Bearbeiter 14 ist mit einer tragbaren Spracheingabeeinrichtung versehen. Diese Spracheingabeeinrichtung umfasst ein Mikrophon 16 und einen Kopfhörer, über den Anweisungen an den Bearbeiter 14 abgegeben werden. Falls der Bearbeiter 14 feststellt, dass in einem vorhergehenden Transportvorgang ein Fehler aufgetreten ist, so spricht er ein vorgegebenes Schlüsselwort in das Mikrophon, z. B. "error" oder "Fehler".

Im Beispiel der Fig. 1 werden Pakete von den USA in die Vereinigten Arabischen Emirate nicht über Großbritannien transportiert, sondern auf dem direkten Weg von den USA nach Arabien. Der Bearbeiter 14 kontrolliert alle Postsendungen, die aus dem Ausland nach Großbritannien gelangen und deshalb die zweite Sortieranlage 2 durchlaufen. Der Bearbeiter 14 stellt bei dieser Kontrolle fest, dass die Postsendung 10 fälschlicherweise nach Großbritannien transportiert wurde. Also liegt ein Transportfehler in einem vorhergehenden Transportvorgang vor.

Der Bearbeiter 14 gibt dann, wenn er einen solchen Transportfehler bemerkt hat, über ein Spracheingabesystem ein Fehlersignal 22 ein, z. B. indem er "error" spricht. Außerdem gibt er eine Information 24 zur korrekten Zustelladresse ein, hier also, indem er "United Arab Emirates" spricht und dadurch eingibt. Insgesamt wird eine sprachliche Nachricht 15 in ein Mikrophon 16 eingegeben und von dem Datenerfassungssystem verarbeitet. Dieses Datenerfassungssystem besitzt ein Sprachverarbeitungssystem, welches auf einer Datenverarbeitungsanlage 17 der zweiten Sortieranlage 2 abläuft.

Das Datenerfassungssystem prüft automatisch, ob beim Durchlaufen der Postsendung 10 ein vorgegebenes Fehlersignal 22 für einen Transportfehler eingegeben wurde oder nicht. Sobald das Datenerfassungssystem festgestellt hat, dass ein Fehlersignal 22 eingegeben wurde, löst die Datenverarbeitungsanlage 17 der zweiten Sortieranlage 2 die folgenden Schritte aus:
- Die auf der Postsendung 10 angebrachte Kennzeichnung 19 in Form eines Logos des ersten Transport-Dienstleisters TL1 wird ermittelt.
- Eine Nachricht 20 über den Transportfehler wird generiert.
- In einer Datenbank wird nach einer E-Mail-Adresse oder Postadresse desjenigen Transport-Dienstleisters TL1 gesucht, der Postsendungen mit dem Logo 19 versieht.
- Die Nachricht 20 wird an eine Datenverarbeitungsanlage 23 des ersten Transport-Dienstleisters TL1 übermittelt.

Die zweite Sortieranlage 2 ermittelt die auf der Postsendung angebrachte Kennzeichnung 19 des ersten Transport-Dienstleisters TL1 beispielsweise dadurch, dass sie auf den Oberflächen der Postsendung 10 nach einem Logo oder einer sonstigen Kennzeichnung 19 des ersten Transport-Dienstleisters TL1 sucht. Oder sie wertet eine Kennung der Postsendung 10 aus, welche eine Kennzeichnung des ersten Transport-Dienstleisters TL1 umfasst. Oder sie sucht in der zentralen Datenbank nach einem Datensatz für die Postsendung 10 und ermittelt durch Lesezugriff auf diesen Datensatz den ersten Transport-Dienstleister TL1.

Die zweite Sortieranlage 2 erzeugt ein Abbild 21 der Postsendung 10. Die Nachricht 20, die an den ersten Transport-Dienstleister TL1 übermittelt wird, umfasst im Ausführungsbeispiel
- ein Abbild 21 der Postsendung 10,
- die Information 24 über die Zustelladresse, die in das Datenerfassungssystem eingegeben wurde,
- ggf. die Kennzeichnung 19 des ersten Transport-Dienstleisters TL1, die auf der Postsendung 10 angebracht ist,
- eine Kennung XY der zweiten Sortieranlage 2, in der der Transportfehler entdeckt wurde.

Das Abbild 21, welches in die Nachricht 20 eingefügt wird, umfasst im Beispiel der Fig. 1
- ein Abbild der Kennzeichnung 11 der Zustelladresse,
- ein Abbild des Strichmusters 12, das die erste Sortieranlage 1 fälschlicherweise aufgedruckt hat, und
- ein Abbild des Logos 19 des ersten Transport-Dienstleisters TL1.

Die zweite Sortieranlage 2 führt diese Schritte automatisch durch, ohne die weitere Zustellung der fehlgeleiteten Postsendung 10 zu unterbrechen. Vielmehr löst die zweite Sortieranlage 2 einen Transport der Postsendung 10 zu derjenigen Zustelladresse aus, die von oder in der zweiten Sortieranlage 2 erkannt wurde.

Im Beispiel von Fig. 1 erzeugt die zweite Sortieranlage 2 ein Strichmuster 13, welches das Zielland "Vereinigte Arabische Emirate" codiert, und versieht das Paket 10 mit diesem Strichmuster 13. Dieses Strichmuster 13 ersetzt das Strichmuster 12, welches die erste Sortieranlage 1 fälschlicherweise angebracht hat.

### Bezugszeichenliste

| *Bezugszeichen* | *Bedeutung* |
|---|---|
| 1 | erste Sortieranlage |
| 2 | zweite Sortieranlage |
| 10 | Postsendung in Form eines Pakets |
| 11 | Kennzeichnung der Zustelladresse auf der Post-sendung 10 |
| 12 | Strichmuster für Großbritannien |
| 13 | Strichmuster für die Vereinigten Arabischen Emirate |
| 14 | Bearbeiter des zweiten Transport-Dienstleisters TL2 in Großbritannien |
| 15 | Nachricht, die der Bearbeiter 14 in das Mikrophon 16 des Datenerfassungssystems eingibt |
| 16 | Mikrophon des Datenerfassungssystems der zweiten Sortieranlage 2 |
| 17 | Datenverarbeitungsanlage der zweiten Sortieranlage 2, generiert die Nachricht 20 |
| 18 | Schiff, das die Postsendung 10 von den USA nach Großbritannien ("UK") transportiert |
| 19 | Logo des ersten Transport-Dienstleisters TL1 |
| 20 | Nachricht über den Transportfehler, die von Datenverarbeitungsanlage 17 der zweiten Sor- |
| 21 | tieranlage 2 erzeugt wird Abbild der Postsendung 10, das von der zweiten Sortieranlage 2 erzeugt wird |
| 22 | Fehlersignal; Bestandteil der Nachricht 15 |
| 23 | Datenverarbeitungsanlage der ersten Sortieranlage 1 |
| 24 | In das Datenerfassungssystem 16, 17 eingegebene Information über die Zustelladresse; Bestandteil der Nachricht 15 |
| TL1 | erster Transport-Dienstleister in den USA; betreibt die erste Sortieranlage 1 |
| TL2 | zweiter Transport-Dienstleister in Großbritannien; betreibt die zweite Sortieranlage 2 |
| XY | Kennung der zweiten Sortieranlage 2 |

## Patentansprüche

1. Verfahren zum Transportieren eines Gegenstands (10) zu einem Zielpunkt,
wobei der Gegenstand (10)
- mit einer Kennzeichnung (11) des Zielpunkts und
- mit einer Kennzeichnung (19) eines Transport-Dienstleisters (TL1)
versehen ist und
das Verfahren die Schritte umfasst, dass
- in ein Datenerfassungssystem (16, 17) eine Information (24) zum Zielpunkt, mit dem der Gegenstand (10) **gekennzeichnet** ist, eingegeben wird und
- abhängig von der eingegebenen Zielpunkt-Information (24) ein Weitertransport des Gegenstands (10) zum Zielpunkt ausgelöst wird,
- bei Auftreten eines Transportfehlers eine rechnerauswertbare Nachricht (20) über den Transportfehler generiert und an eine Datenverarbeitungsanlage (23) eines Transport-Dienstleisters (TL1) übermittelt wird,
**dadurch gekennzeichnet, dass**
- der Gegenstand (10) mindestens einmal zu einer Sortieranlage (2) transportiert wird, nachdem er mit der Kennzeichnung (19) des Transport-Dienstleisters (TL1) versehen wurde,
- die Sortieranlage (2) das Datenerfassungssystem (16, 17) umfasst,
- der Gegenstand (10) die Sortieranlage (2) durchläuft,
- die Sortieranlage (2) den Weitertransport des Gegenstands (10) abhängig von der eingegebenen Zielpunkt-Information (24) auslöst,
- automatisch entschieden wird, ob beim Durchlaufen des Gegenstands (10) durch die Sortieranlage (2) in das Datenerfassungssystem (16, 17) ein vorgegebenes Fehlersignal (22)
für einen Transportfehler eingegeben wurde oder nicht und dann, wenn die Eingabe des Fehlersignals (22) festgestellt wurde, automatisch die folgenden Schritte durchgeführt werden:
- der Transport-Dienstleisters (TL1) wird ermittelt, wofür die auf dem Gegenstand (10) angebrachte Kennzeichnung (19) des Transport-Dienstleisters (TL1) ermittelt wird, und
- die rechnerauswertbare Nachricht (20) wird dergestalt generiert, dass sie die eingegebene Zielpunkt-Information (24) umfasst.

2. Verfahren nach Anspruch 1,
**dadurch gekennzeichnet, dass**
die Zielpunkt-Information (24) durch Spracheingabe in das Datenerfassungssystem (16, 17) eingegeben wird und die Eingabe des Fehlersignals (22) den Schritt umfasst, dass ein Wort ("error") oder eine Wortfolge durch Spracheingabe in das Datenerfassungssystem (16, 17) eingegeben wird.

3. Verfahren nach Anspruch 1 oder Anspruch 2,
**dadurch gekennzeichnet, dass**
die Sortieranlage (2) mit einer Kennung versehen ist und die Kennung der Sortieranlage (2) in die Nachricht (20), die an den Transport-Dienstleister (TL1) übermittelt wird, eingefügt wird.

4. Verfahren nach einem der Ansprüche 1 bis 3,
**dadurch gekennzeichnet, dass**
beim Durchlaufen des Gegenstands (10) zusätzlich ein Abbild (21) des Gegenstands (10) erzeugt wird und
das Abbild (21) in die Nachricht (20), die an den Transport-Dienstleister (TL1) übermittelt wird, eingefügt wird.

5. Verfahren nach Anspruch 4,
**dadurch gekennzeichnet, dass**
das Abbild (21) an eine Videocodierstation übermittelt wird, wobei das Datenerfassungssystem (16, 17) ein Bestandteil der Videocodierstation ist,
die Videocodierstation das Abbild (21) auf einem Anzeigegerät darstellt und
die Zielpunkt-Information (24) unter Verwendung des dargestellten Abbilds (21) eingegeben wird.

6. Verfahren nach einem der Ansprüche 1 bis 5,
**dadurch gekennzeichnet, dass**
die ermittelte Kennzeichnung (19) des Transport-Dienstleisters (TL1)
in die Nachricht (20), die an den Transport-Dienstleister (TL1) übermittelt wird, eingefügt wird.

7. Verfahren nach einem der Ansprüche 1 bis 6,
**dadurch gekennzeichnet, dass**
der Schritt, dass der Gegenstand (10) mit einer Kennzeichnung (19) des Transport-Dienstleisters (TL1) versehen wird, die Teilschritte umfasst, dass
- der Gegenstand (10) mit einer Kennung versehen wird,
- ein Datensatz mit der Kennung des Gegenstands (10) und einer Kennzeichnung (19) des Transport-Dienstleisters (TL1) generiert und in einer zentralen Datenbank abgespeichert wird und
der Schritt, dass die auf dem Gegenstand (10) angebrachte Kennzeichnung (19) des Transport-Dienstleisters ermittelt wird, die Teilschritte umfasst, dass
- die Kennung des Gegenstands (10) ermittelt wird,
- ein Lesezugriff auf die zentrale Datenbank hergestellt wird und
- der Datensatz mit der ermittelten Gegenstands-Kennung ermittelt und die Kennzeichnung des Transport-Dienstleisters ausgelesen wird.

8. Vorrichtung, die zum Steuern des Transports eines Gegenstands (10) zu einem Zielpunkt ausgestaltet ist,
wobei der Gegenstand (10)
- mit einer Kennzeichnung (11) des Zielpunkts und
- mit einer Kennzeichnung (19) eines Transport-Dienstleisters (TL1)
versehen ist,
die Vorrichtung ein Datenerfassungssystem (16, 17) umfasst, das Datenerfassungssystem (16, 17) dazu ausgestaltet ist, eine Information (24) zum Zielpunkt, mit dem der Gegenstand (10) **gekennzeichnet** ist, zu erfassen und
die Vorrichtung dazu ausgestaltet ist,
- einen Weitertransport des Gegenstands (10) zum Zielpunkt abhängig von der eingegebenen Zielpunkt-Information (24) auszulösen und
- beim Auftreten eines Transportfehlers eine rechnerauswertbare Nachricht (20) über den Transportfehler zu generieren und an eine Datenverarbeitungsanlage (23) des Transport-Dienstleisters (TL1) zu übermitteln,
**dadurch gekennzeichnet, dass**
die Vorrichtung als Sortieranlage (2) ausgestaltet ist, die das Datenerfassungssystem (16, 17) umfasst,
die Sortieranlage (2) dazu ausgestaltet ist, dass der Gegenstand (10) mit der Kennzeichnung (19) eines Transport-Dienstleisters (TL1) die Sortieranlage (2) durchläuft,
das Datenerfassungssystem (16, 17) dazu ausgestaltet ist, automatisch zu entscheiden, ob beim Durchlaufen des Gegenstands (10) ein vorgegebenes Fehlersignal (22) für einen Transportfehler eingegeben wurde oder nicht, und
die Sortieranlage (2) dazu ausgestaltet ist,
dann, wenn das Datenerfassungssystem (16, 17) die Eingabe des Fehlersignals festgestellt hat, automatisch die folgenden Schritte durchzuführen:
der Transport-Dienstleisters (TL1) wird ermittelt, wofür die auf dem Gegenstand (10) angebrachte Kennzeichnung (19) des Transport-Dienstleisters (TL1) ermittelt wird
- Ermittlung des Transport-Dienstleisters (TL1) durch Ermittlung der auf dem Gegenstand (10) angebrachten Kennzeichnung (19) des Transport-Dienstleisters (TL1),
- Generierung der Nachricht (20) über den Transportfehler dergestalt, dass die Nachricht (20) die eingegebene Zielpunkt-Information (24) umfasst, und
- Auslösen der Übermittlung der Nachricht (20) an den Transport-Dienstleister (TL1).

9. Sortieranlage nach Anspruch 8,
**dadurch gekennzeichnet, dass**
die Sortieranlage (2) dazu ausgestaltet ist,
in die Nachricht (20), die an den Transport-Dienstleister übermittelt wird,
die ermittelte Kennzeichnung (19) des Transport-Dienstleisters (TL1) einzufügen.

10. Sortieranlage nach Anspruch 8 oder Anspruch 9,
**dadurch gekennzeichnet, dass**
die Sortieranlage (2) dazu ausgestaltet ist,
- beim Durchlaufen des Gegenstands (10) zusätzlich ein Abbild (21) des Gegenstands (10) zu erzeugen und
- dieses Abbild (21) in die Nachricht (20), die an den Transport-Dienstleister übermittelt wird, einzufügen.
